(19) Europäisches Patentamt
European Patent Office
Office européen des brevets

(11) **EP 4 386 203 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **22214283.8**

(22) Anmeldetag: **16.12.2022**

(51) Internationale Patentklassifikation (IPC):
**F03D 13/10** (2016.01)   **E04H 12/34** (2006.01)
**B66C 23/20** (2006.01)   **B66C 23/32** (2006.01)
**B66C 23/82** (2006.01)   **B66C 23/88** (2006.01)

(52) Gemeinsame Patentklassifikation (CPC):
**B66C 23/207; B66C 23/32; B66C 23/82; B66C 23/88; E04H 12/342; E04H 12/348; F03D 13/112; F03D 13/139;** F03D 80/011; F05B 2230/60; F05B 2230/70; F05B 2240/916

(54) **VERFAHREN ZUM ERRICHTEN UND/ODER RÜCKBAUEN EINES TURMS, INSBESONDERE EINES TURMS EINER WINDENERGIEANLAGE**

METHOD FOR ERECTING AND/OR DISMANTLING A TOWER, IN PARTICULAR A TOWER OF A WIND ENERGY PLANT

PROCÉDÉ POUR ÉRIGER ET/OU RENVERSER UNE TOUR, EN PARTICULIER UNE TOUR D'UNE ÉOLIENNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**19.06.2024   Patentblatt 2024/25**

(73) Patentinhaber: **Wobben Properties GmbH**
**26607 Aurich (DE)**

(72) Erfinder:
• **LAGERWEIJ, Hendrik Lambertus**
**3774 CT Kootwijkerbroek (NL)**
• **VAN DE POL, Aart**
**6731 EJ Otterlo (NL)**
• **PUBANZ, Andre Heinz**
**3818 GL Amersfoort (NL)**
• **WAAIJENBERG, Albertus**
**3772 JM Barneveld (NL)**

(74) Vertreter: **Eisenführ Speiser**
**Patentanwälte Rechtsanwälte PartGmbB**
**Johannes-Brahms-Platz 1**
**20355 Hamburg (DE)**

(56) Entgegenhaltungen:
**EP-A1- 4 140 932        WO-A1-2022/124909**
**DE-A1- 102011 102 371**

**Beschreibung**

Die Erfindung betrifft ein Verfahren zum Errichten und/oder Rückbauen eines Turms, insbesondere eines Turms einer Windenergieanlage.

Ein bekanntes Verfahren zum Errichten und zum Rückbauen eines Turms einer Windenergieanlage ist in DE 102011102371 A1 offenbart.

Das Errichten und/oder Rückbauen eines Turms, insbesondere eines Turms einer Windenergieanlage ist ein aufwendiger Prozess, der mit einem hohen Kosten- und Zeitaufwand sowie einem hohen Platzbedarf verbunden ist. Eine besondere Herausforderung stellt zusätzlich dar, dass der Turm während des Errichtens und/oder Rückbauens eine veränderte, insbesondere geringere Belastungsgrenze aufweist als im vollständig errichteten Betriebszustand, insbesondere in einem Betriebszustand mit betriebsbereiter Gondel am Turmkopf.

Es ist daher eine Aufgabe der vorliegenden Erfindung, ein verbessertes Verfahren zum Errichten und/oder Rückbauen eines Turms, insbesondere eines Turms einer Windenergieanlage bereitzustellen. Insbesondere ist es eine Aufgabe der vorliegenden Erfindung, ein Verfahren zum Errichten und/oder Rückbauen eines Turms, insbesondere eines Turms einer Windenergieanlage bereitzustellen, welches die Sicherheit während des Errichtens und/oder Rückbauens erhöht und/oder den Kosten- und/oder Zeitaufwand und/oder Platzbedarf reduziert und/oder eine wirtschaftlichere Lösung darstellt.

Diese Aufgabe wird gelöst durch ein Verfahren zum Errichten und/oder Rückbauen eines Turms, insbesondere eines Turms einer Windenergieanlage, gemäß Anspruch 1, das Verfahren umfassend Bereitstellen eines Kletterkrans, Errichten des Turms durch Anheben und Befestigen von Turmsegmenten und/oder Rückbauen des Turms durch Lösen und Absenken von Turmsegmenten, Durchführen von, vorzugsweise temporären, Sicherungsmaßnahmen zur Sicherung des Turms im Montagezustand, insbesondere bei zu erwartenden Windbelastungen des Turms und Berücksichtigen des Kletterkrans, insbesondere von dessen Gewicht, beim Durchführen der Sicherungsmaßnahmen.

Als Kletterkran wird hier ein Kran bezeichnet, der beim Errichten und/oder Rückbauen des Turms an dem zu errichtenden bzw. rückzubauenden Turm mit nach oben und/oder unten klettert. Kletterkräne sind beschrieben beispielsweise in WO 2018/185111 A1, WO 2017/055598 A1 oder WO 2017/202841 A1. Die hier beschriebene Lösung kann mit einer Vielzahl von Kletterkrankonstruktionen eingesetzt werden, insbesondere mit den in WO 2018/185111 A1, WO 2017/055598 A1 oder WO 2017/202841 A1 beschribenen.

Der Einsatz eines Kletterkrans hat u.a. den Vorteil, dass kein stationärer Kran, der neben dem zu errichtenden oder rückzubauenden Turm anzuordnen ist, erforderlich ist. Hierdurch werden Zeit und Kosten in erheblichem Maße eingeschränkt.

Sicherungsmaßnahmen sind beim Errichten eines Turms in der Regel erforderlich, um den Turm im Montagezustand zu sichern, insbesondere wenn Belastungen des Turms zu erwarten sind. Belastungen des Turms können insbesondere aus Wind resultieren und hängen insbesondere von der Windgeschwindigkeit ab. Insbesondere wenn im Montagezustand des Turms Windgeschwindigkeiten auftreten, die eine Maximalbelastung des Turms im Montagezustand (die beispielsweise deutlich anders oder geringer sein kann als eine Maximalbelastung des Turms im Betriebszustand mit montierter Gondel) erreichen oder überschreiten, können Schäden am Turm im Montagezustand auftreten, die evtl. sogar zu einem Kollaps des Turms im Montagezustand führen könnten. Daher sind Sicherungsmaßnahmen beim Errichten eines Turms in der Regel erforderlich. Da Windgeschwindigkeiten, die eine Maximalbelastung des Turms im Montagezustand erreichen oder überschreiten, in der Regel nur temporär auftreten, sind die Sicherungsmaßnahmen vorzugsweise ebenfalls temporär, d.h. zeitlich begrenzt. Insbesondere sind die Sicherungsmaßnahmen vorzugsweise deutlich kürzer als die Gesamtdauer zur Errichtung des Turms.

Beispielsweise können die Sicherungsmaßnahmen insbesondere dann durchgeführt werden, wenn die Errichtung des Turms unterbrochen werden muss aufgrund von Windgeschwindigkeiten, die eine Maximalbelastung des Turms im Montagezustand erreichen oder überschreiten. Vorzugsweise werden die Sicherungsmaßnahmen wieder beendet, wenn die zu erwartenden Belastungen wieder unterhalb einer Maximalbelastung des Turms im Montagezustand liegen.

Dies hat den Vorteil, dass auch bei während des Errichtens und/oder Rückbauens des Turms auftretenden ungünstigen Windverhältnissen, bei denen ansonsten bei existierenden Lösungen die Arbeiten unterbrochen und/oder ein Kran und/oder der Turm ganz oder teilweise außer Betrieb genommen werden müssen, der Turm im Montage- und/oder Demontagezustand mit Kletterkran verbleiben kann, ohne dass die Standsicherheit gefährdet ist. Insbesondere kann es vorteilhaft sein, dass auch bei ungünstigen Windverhältnissen das Errichten und/oder Rückbauen fortgesetzt werden kann unter Bedingungen, die ansonsten bei existierenden Lösungen zu einer Unterbrechung geführt hätten.

Vorzugsweise umfassen die Sicherungsmaßnahmen eine, zwei, mehrere oder alle der folgenden Maßnahmen:

- Anbringen von Zusatzgewichten, insbesondere am oberen Ende des Turms im jeweiligen Montagezustand,
- Anbringen von Abspannungen, insbesondere am oberen Ende des Turms im jeweiligen Montagezustand.

Vorzugsweise umfasst das Beenden von Sicherungsmaßnahmen das Entfernen von zusätzlich angebrachten Funktionselementen, wie Zusatzgewichten und/oder Abspannungen.

Im erfindungsgemäßen Verfahren sind die folgenden weiteren Schritte vorgesehen: Ermitteln einer aktuellen und/oder innerhalb der nächsten 72 Stunden zu erwartenden Windgeschwindigkeit, Ermitteln einer aktuellen und/oder innerhalb der nächsten 72 Stunden zu erwartenden Belastung des Turms mit Kletterkran auf Basis einer aktuellen und/oder innerhalb der nächsten 72 Stunden zu erreichenden Turmhöhe und der ermittelten Windgeschwindigkeit.

Es ist dabei vorgesehen, während des Errichtens und/oder Rückbauens des Turms die aktuelle und/oder die innerhalb der nächsten 72 Stunden zu erwartende Windgeschwindigkeit zu ermitteln und daraus die Belastung ableiten zu können, die aus dem Wind resultiert, der den Turm mit seiner aktuellen und/oder innerhalb der nächsten 72 Stunden zu erreichenden Turmhöhe umströmt.

Den Turm umströmender Wind kann den Turm insbesondere zu Schwingungen anregen, die - wenn sie nahe der Eigenfrequenz des Turms liegen - zu einer die Standsicherheit des Turms gefährdenden Belastung werden können. Dies ist insbesondere der Fall, wenn sich der Turm während des Errichtens und/oder Rückbauens noch nicht oder nicht mehr im vollständig errichteten Betriebszustand, insbesondere in einem Betriebszustand mit betriebsbereiter Gondel am Turmkopf, befindet, sondern stattdessen eine geringere Turmhöhe aufweist und/oder keine Gondel am Turmkopf montiert ist. In einem solchen Montage- und/oder Demontagezustand weist der Turm in der Regel eine andere Eigenfrequenz auf als im vollständig errichteten Betriebszustand, insbesondere in einem Betriebszustand mit betriebsbereiter Gondel am Turmkopf.

Dadurch, dass sich in dem Montage- und/oder Demontagezustand der Kletterkran am Turm befindet, wird die Belastungsgrenze des Turms positiv beeinflusst. Diese bedeutet, dass der Turm im Montage- und/oder Demontagezustand ohne Kletterkran eine niedrigere Belastungsgrenze aufweisen kann als mit Kletterkran. Insbesondere die Eigenfrequenz des Turms im Montage- und/oder Demontagezustand kann durch die Anordnung des Kletterkrans positiv beeinflusst werden, insbesondere in dem Sinne, dass die Eigenfrequenz in einem für Windanregung weniger anfälligen Bereich liegt. Dies liegt unter anderem daran, dass die Masse des Kletterkrans, die sich vorzugsweise am jeweils oberen Ende des Turms befindet, als Dämpfer auf den Turm im Montage- und/oder Demontagezustand wirkt.

Gemäß einer bevorzugten Ausführungsform ist vorgesehen, dass das Ermitteln der Belastung umfasst: Ermitteln einer Eigenfrequenz des Turms inklusive des Kletterkrans auf Basis einer aktuellen und/oder innerhalb der nächsten 72 Stunden zu erreichenden Turmhöhe. Wie bereits erwähnt wirkt sich der Kletterkran im Montage- und/oder Demontagezustand des Turms besonders positiv auf die Eigenfrequenz aus.

In einer weiteren bevorzugten Ausführungsform ist vorgesehen, dass das Ermitteln der Belastung umfasst: Ermitteln einer sich aus einer Wirbelbildung des inklusive Kletterkrans windumströmten Turms ergebenden Anregung auf Basis einer aktuellen und/oder innerhalb der nächsten 72 Stunden zu erreichenden Turmhöhe. Dabei ist vorzugsweise vorgesehen, dass die Wirbelbildung als Kármänsche Wirbelstraße ermittelt wird.

Insbesondere durch Wirbelbildung hervorgerufene Belastungen, wie insbesondere Schwingungen, können die Standsicherheit eines Turms, insbesondere im Montage- und/oder Demontagezustand, gefährden.

Dies ist insbesondere der Fall, wenn die Ablösefrequenz der Wirbel der Eigenfrequenz des umströmten Turms entspricht, da der Turm dadurch in Schwingung versetzt wird.

Die Ablösefrequenz $f$ der Wirbel kann, insbesondere nach der Kármänschen Wirbelstraße, über die Strouhalzahl $S_r$ bestimmt werden. Es gilt:

$$f = S_r \cdot \frac{v}{d},$$

wobei $v$ für die Anströmgeschwindigkeit und $d$ für eine charakteristische Abmessung des umströmten Körpers steht. Die Strouhalzahl ist von der Form des Körpers und der Reynoldszahl abhängig. Für zylindrische Körper beträgt sie für einen weiten Bereich von Reynoldszahlen 0,18-0,22. Hier wird $Sr = 0,2$ gewählt. Als charakteristische Abmessung wird hier der Durchmesser eingesetzt.

Es ist daher vorteilhaft, diese Belastungen zu ermitteln, da auch hier die Belastungsgrenze des Turms, insbesondere im Montage- und/oder Demontagezustand, durch den Kletterkran positiv beeinflusst wird.

Eine weitere bevorzugte Weiterbildung ist gekennzeichnet durch Abgleichen der ermittelten Belastung mit einer Maximalbelastung.

Die Maximalbelastung ist vorzugsweise eine Belastungsgrenze des Turms im Montage- und/oder Demontagezustand, insbesondere in der aktuellen und/oder innerhalb der nächsten 72 Stunden zu erreichenden Turmhöhe. Die Maximalbelastung kann insbesondere auch die Eigenfrequenz des Turms inklusive Kletterkran im Montage- und/oder Demontagezustand in der aktuellen und/oder innerhalb der nächsten 72 Stunden zu erreichenden Turmhöhe berücksichtigen.

Ferner ist eine Ausführungsform bevorzugt, die gekennzeichnet ist durch Fortsetzen des Errichtens und/oder Rückbauens des Turms, wenn die ermittelte Belastung die Maximalbelastung nicht erreicht oder überschreitet.

Diese Fortbildung ist von Vorteil, da hier auch bei ungünstigen Windverhältnissen, bei denen bei existierenden Lösungen das Errichten und/oder Rückbauen unterbrochen werden müsste, das Verfahren fortgeführt werden kann.

Eine weitere bevorzugte Weiterbildung ist gekennzeichnet durch Unterbrechen des Errichtens und/oder Rückbauens des Turms, wenn die ermittelte Belastung die Maximalbelastung erreicht oder überschreitet. Eine Unterbrechung kann erforderlich werden, ist in der Regel aber deutlich seltener als im Stand der Technik der Fall.

Ferner ist eine Ausführungsform bevorzugt, die gekennzeichnet ist durch Verändern des geplanten Errichtens und/oder Rückbauens des Turms, insbesondere Verzögern oder beschleunigen, derart, dass die ermittelte Belastung die Maximalbelastung nicht erreicht oder überschreitet, insbesondere die ermittelte innerhalb der nächsten 72 Stunden zu erwartendeBelastung.

Auf diese Weise kann z.B. durch das Anpassen der zu erreichenden Turmhöhe innerhalb der nächsten 72 Stunden die Eigenfrequenz des Turms mit Kletterkran so verändert werden, dass eine Belastungsgrenze nicht erreicht bzw. überschritten wird.

Eine weitere bevorzugte Fortbildung zeichnet sich dadurch aus, dass der Kletterkran am oberen Ende der aktuellen und/oder innerhalb der nächsten 72 Stunden zu erreichenden Turmhöhe angeordnet ist. Die Anordnung des Kletterkrans, und damit der mit dem Kletterkran verbundenen Masse, am oberen Ende der aktuellen und/oder innerhalb der nächsten 72 Stunden zu erreichenden Turmhöhe wirkt sich in der Regel besonders vorteilhaft auf die Eigenfrequenz aus.

Ferner kann eine Ausführungsform bevorzugt sein, bei der die Höhe der Position des Kletterkrans am Turm nach oben oder unten verändert wird. Auch auf diese Weise kann in vorteilhafter Weise die Eigenfrequenz des Turms mit Kletterkran so verändert werden, dass eine Belastungsgrenze nicht erreicht bzw. überschritten wird.

Eine weitere bevorzugte Weiterbildung ist gekennzeichnet durch Bereitstellen eines Turmstumpfes am Turmfuß mit mindestens einem ersten Turmsegment, und vorzugsweise mit einem zweiten Turmsegment und ggf. einem dritten Turmsegment.

Dabei ist es insbesondere bevorzugt, dass das erste Turmsegment auf einem Turmfundament bereitgestellt wird.

Ferner ist es bevorzugt, dass der Turmstumpf mittels eines mobilen Krans, beispielsweise eines Autokrans, errichtet wird. Das Errichten des Turmstumpfes umfasst vorzugsweise Anheben und Befestigen des mindestens einen ersten Turmsegments auf dem Turmfundament, und ggf. Anheben und Befestigen des zweiten Turmsegments auf dem ersten Turmsegment, und ggf. Anheben und Befestigen des dritten Turmsegments auf dem zweiten Turmsegment.

Eine weitere bevorzugte Weiterbildung ist gekennzeichnet durch Befestigen des Kletterkrans an dem Turmstumpf.

Das Bereitstellen eines Turmstumpfes am Turmfuß und das Befestigen des Kletterkrans an dem Turmstumpf erfolgt vorzugsweise zum Errichten des Turms, wobei vorzugsweise durch Anheben von weiteren Turmsegmenten und Befestigen der weiteren Turmsegmente auf dem jeweils darunterliegenden Turmsegment und einem entsprechenden nach oben Klettern des Kletterkrans der Turm ausgehend vom Turmstumpf bis zu seiner vollständigen Höhe im Betriebszustand errichtet wird.

Eine weitere bevorzugte Ausführungsform zeichnet sich aus durch Bereitstellen eines Turms, Befestigen des Kletterkrans an dem Turm, insbesondere am Turmkopf.

Diese Variante ist insbesondere bevorzugt zum Rückbauen des Turms. Hierbei kann vorzugsweise der Kletterkran am Turmkopf des Turms, insbesondere zu Beginn des Rückbaus an einer vollständigen oder nahezu vollständigen Höhe des Turms im Betriebszustand angeordnet werden. Diese Anordnung am Turmkopf kann vorzugsweise auch so erfolgen, dass der Kletterkran zunächst am Turmfuß oder in Turmfußnähe angeordnet wird, beispielsweise mittels eines mobilen Krans, wie etwa eines Autokrans, und dann nach oben klettert. Sobald der Kletterkran am Turmkopf angeordnet ist, erfolgt der Rückbau dann vorzugsweise durch Lösen und Absenken von Turmsegmenten.

Bevorzugte Ausführungsbeispiele werden beispielhaft anhand der beiliegenden Figuren beschrieben. Es zeigen:

Figur 1: eine schematische Darstellung einer Windenergieanlage;

Figur 2: eine schematische Darstellung eines Turms einer Windenergieanlage im Montagezustand mit Kletterkran; und

Figur 3: ein schematisches Ablaufdiagramm eines beispielhaften Verfahrens.

In den Figuren sind gleiche oder im Wesentlichen funktionsgleiche Elemente mit den gleichen Bezugszeichen versehen. Allgemeine Beschreibungen beziehen sich in der Regel auf alle Ausführungsbeispiele, sofern Unterschiede nicht explizit angegeben sind.

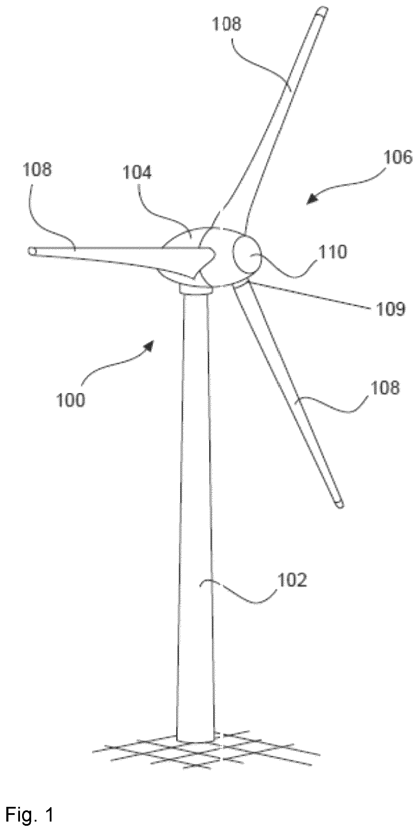

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

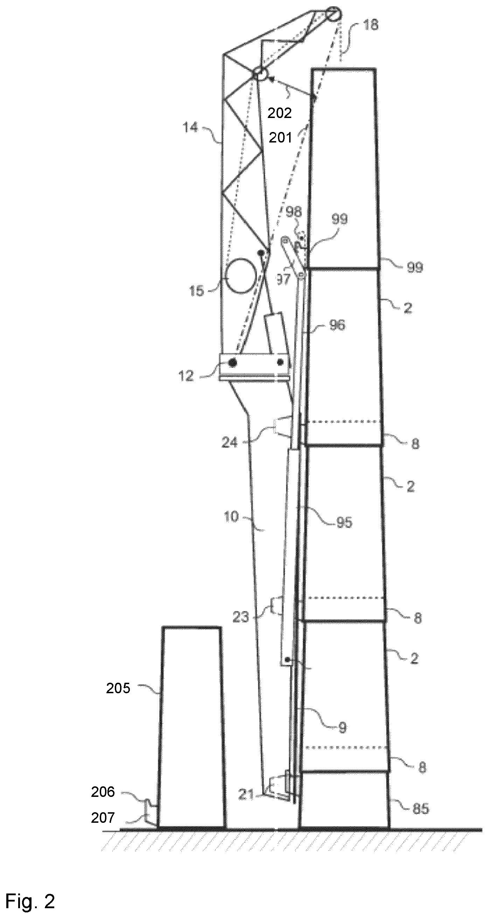

Fig. 2 zeigt einen beispielhaften Kletterkran, der auch als Hebesystem bezeichnet werden kann, und beispielhafte erste Turmsegmente im Detail. Die Säule des Hebesystems besteht aus einem Hydraulikzylinder 95 mit Kolben 96 und einem Aktuator, der sich in einem Zustand 97 befindet, in dem er einen Befestigungspunkt 99 passieren kann, und in einem Zustand 98, in dem er mit dem Befestigungspunkt 99 verbunden ist. Das Hebesystem kann sich nach oben bewegen, nachdem der Aktuator sich im Zustand 98 befindet und mit dem Befestigungspunkt 99 am Turmsegment 201 verriegelt ist und der Hydraulikzylinder 95 betätigt wird, bis das Gewicht des Krans vom Hydraulikzylinder getragen wird. Dann werden die Verriegelungssysteme 21, 23 und 24 entriegelt, wobei anzumerken ist, dass, obwohl in Fig. 2 drei Verriegelungssysteme dargestellt sind, eine beliebige Anzahl von Verriegelungssystemen größer als Null möglich ist. Dann wird der Hydraulikzylinder 95 weiter aktiviert, so dass der Kolben 96 in den Zylinder 95 gezogen wird, so dass sich das Hebesystem nach oben bewegt. Die Aufwärtsbewegung wird fortgesetzt, bis ein beliebiges Verriegelungssystem einen Fixierungspunkt erreicht, an dem es verriegelt werden kann und das Gewicht des Hebesystems vom Hydraulikzylinder 95 auf das Verriegelungssystem übertragen werden kann.

Es sollte klar sein, dass auch zwei Zylinder möglich sind: jeder an einer Seite der Säule oder sogar mehrere Zylinder, z. B. Zylinder, die das Hebesystem nach oben drücken, anstatt es nach oben zu ziehen.

Fig. 2 zeigt auch, dass der Ausleger aufgrund der Biegung des Auslegers einen Abstand 202 zum Turmsegment 201 zwischen der Mitte des Kippgelenks und dem Hebepunkt erreicht.

In Fig. 2 ist ferner ein weiteres Turmsegment 205 dargestellt, das noch angehoben werden muss. Das Segment weist einen Befestigungspunkt 207 mit einer Kante 206 auf, die zur Aufnahme des Aktuators 98 dient.

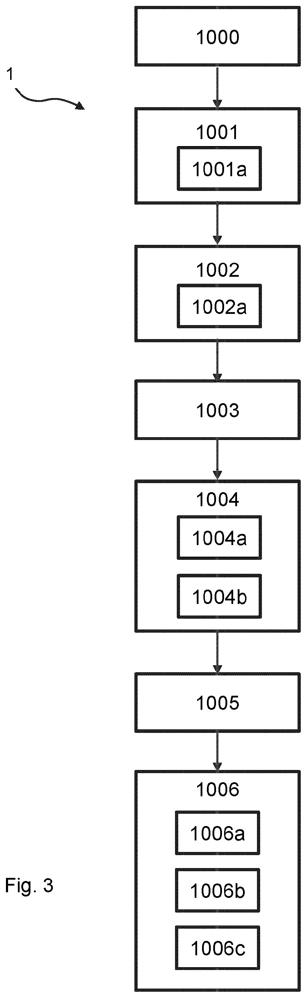

In Figur 3 ist schematisch ein Ablaufdiagramm eines Verfahrens 1 zum Errichten und/oder Rückbauen eines Turms, insbesondere eines Turms einer Windenergieanlage dargestellt.

In einem ersten Schritt 1000 wird ein Turmstumpf am Turmfuß bereitgestellt. Der Turmstumpf hat mindestens ein erstes Turmsegment, insbesondere auf einem Turmfundament, und vorzugsweise ein zweites Turmsegment und ggf. ein drittes Turmsegment, wobei vorzugsweise der Turmstumpf mittels eines mobilen Krans, beispielsweise eines Autokrans, errichtet wird,

In einem Schritt 1001 wird ein Kletterkran bereitgestellt und im Schritt 1001a an dem Turmstumpf befestigt.

Im Schritt 1002 werden, vorzugsweise temporär, Sicherungsmaßnahmen zur Sicherung des Turms im Montagezustand, insbesondere bei zu erwartenden Windbelastungen des Turms, durchgeführt. Dabei wird im Schritt 1002a der Kletterkran, insbesondere dessen Gewicht, berücksichtigt. Die Sicherungsmaßnahmen können insbesondere das Anbringen von Zusatzgewichten, insbesondere am oberen Ende des Turms im jeweiligen Montagezustand, und/oder das Anbringen von Abspannungen, insbesondere am oberen Ende des Turms im jeweiligen Montagezustand, umfassen. In einem Schritt 1003 wird eine aktuelle und/oder innerhalb der nächsten 72 Stunden zu erwartende Windgeschwindigkeit ermittelt.

In einem Schritt 1004 wird eine aktuelle und/oder innerhalb der nächsten 72 Stunden zu erwartende Belastung des Turms mit Kletterkran ermittelt auf Basis einer aktuellen und/oder innerhalb der nächsten 72 Stunden zu erreichenden Turmhöhe und der ermittelten Windgeschwindigkeit. Das Ermitteln der Belastung umfasst in einem Schritt 1004a das Ermitteln einer Eigenfrequenz des Turms inklusive des Kletterkrans auf Basis einer aktuellen und/oder innerhalb der nächsten 72 Stunden zu erreichenden Turmhöhe. Das Ermitteln der Belastung kann in einem Schritt 1004b auch das Ermitteln einer sich aus einer Wirbelbildung des inklusive Kletterkrans windumströmten Turms ergebenden Anregung auf Basis einer aktuellen und/oder innerhalb der nächsten 72 Stunden zu erreichenden Turmhöhe umfassen.

In einem Schritt 1005 erfolgt das Abgleichen der ermittelten Belastung mit einer Maximalbelastung.

In einem Schritt 1006 wird der Turm durch Anheben und Befestigen von Turmsegmenten errichtet und/oder durch Lösen und Absenken von Turmsegmenten rückgebaut.

Das Errichten und/oder Rückbauen kann insbesondere weiter umfassen einen Schritt 1006a mit Fortsetzen des Errichtens und/oder Rückbauens des Turms, wenn die ermittelte Belastung die Maximalbelastung nicht erreicht oder überschreitet, und/oder einen Schritt 1006b mit Unterbrechen des Errichtens und/oder Rückbauens des Turms, wenn die ermittelte Belastung die Maximalbelastung erreicht oder überschreitet, und/oder einen Schritt 1006c mit Verändern des geplanten Errichtens und/oder Rückbauens des Turms, insbesondere Verzögern oder beschleunigen, derart, dass die ermittelte Belastung die Maximalbelastung nicht erreicht oder überschreitet, insbesondere die ermittelte innerhalb der nächsten 72 Stunden zu erwartende Belastung.

Mit dem hier beschriebenen Verfahren kann eine besonders wirtschaftliche Lösung für das Errichten und/oder Rückbauen eines Turms, insbesondere eines Turms einer Windenergieanlage, geschaffen werden, bei dem insbesondere auch die (Stand-)Sicherheit während des Errichtens und/oder Rückbauens erhöht wird. Ferner werden in vorteilhafter Weise Kosten und Zeit eingespart und der erforderliche Platzbedarf reduziert.

**Patentansprüche**

1. Verfahren (1) zum Errichten und/oder Rückbauen eines Turms, insbesondere eines Turms einer Windenergieanlage, das Verfahren umfassend

   - Bereitstellen (1001) eines Kletterkrans,

- Errichten (1006) des Turms durch Anheben und Befestigen von Turmsegmenten und/oder Rückbauen des Turms durch Lösen und Absenken von Turmsegmenten,

- Durchführen (1002) von, vorzugsweise temporären, Sicherungsmaßnahmen zur Sicherung des Turms im Montagezustand, insbesondere bei zu erwartenden Windbelastungen des Turms,

- Berücksichtigen (1002a) des Kletterkrans, insbesondere von dessen Gewicht, beim Durchführen der Sicherungsmaßnahmen,

**gekennzeichnet durch**:

- Ermitteln (1003) einer aktuellen und/oder innerhalb der nächsten 72 Stunden zu erwartenden Windgeschwindigkeit,

- Ermitteln (1004) einer aktuellen und/oder innerhalb der nächsten 72 Stunden zu erwartenden Belastung des Turms mit Kletterkran auf Basis einer aktuellen und/oder innerhalb der nächsten 72 Stunden zu erreichenden Turmhöhe und der ermittelten Windgeschwindigkeit.

2. Verfahren (1) nach dem vorhergehenden Anspruch **dadurch gekennzeichnet, dass** die Sicherungsmaßnahmen eine, zwei oder alle der folgenden Maßnahmen umfassen:

- Anbringen von Zusatzgewichten, insbesondere am oberen Ende des Turms im jeweiligen Montagezustand,

- Anbringen von Abspannungen, insbesondere am oberen Ende des Turms im jeweiligen Montagezustand.

3. Verfahren (1) nach mindestens einem der vorhergehenden Ansprüche, **dadurch gekennzeichnet, dass** das Ermitteln der Belastung umfasst:

- Ermitteln (1004a) einer Eigenfrequenz des Turms inklusive des Kletterkrans auf Basis einer aktuellen und/oder innerhalb der nächsten 72 Stunden zu erreichenden Turmhöhe, und/oder

- Ermitteln (1004b) einer sich aus einer Wirbelbildung des inklusive Kletterkrans windumströmten Turms ergebenden Anregung auf Basis einer aktuellen und/oder innerhalb der nächsten 72 Stunden zu erreichenden Turmhöhe.

4. Verfahren (1) nach dem vorhergehenden Anspruch, **dadurch gekennzeichnet, dass** die Wirbelbildung als Kármánsche Wirbelstraße ermittelt wird.

5. Verfahren (1) nach mindestens einem der vorhergehenden Ansprüche,

**gekennzeichnet durch**:

- Abgleichen (1005) der ermittelten Belastung mit einer Maximalbelastung.

6. Verfahren (1) nach dem vorhergehenden Anspruch, **gekennzeichnet durch**:

- Fortsetzen (1006a) des Errichtens und/oder Rückbauens des Turms, wenn die ermittelte Belastung die Maximalbelastung nicht erreicht oder überschreitet.

7. Verfahren (1) nach mindestens einem der vorhergehenden Ansprüche 5-6, **gekennzeichnet durch**:

- Unterbrechen (1006b) des Errichtens und/oder Rückbauens des Turms, wenn die ermittelte Belastung die Maximalbelastung erreicht oder überschreitet.

8. Verfahren (1) nach mindestens einem der vorhergehenden Ansprüche 5-7, **gekennzeichnet durch**:

- Verändern (1006c) des geplanten Errichtens und/oder Rückbauens des Turms, insbesondere Verzögern oder beschleunigen, derart, dass die ermittelte Belastung die Maximalbelastung nicht erreicht oder überschreitet, insbesondere die ermittelte innerhalb der nächsten 72 Stunden zu erwartende Belastung.

9. Verfahren (1) nach mindestens einem der vorhergehenden Ansprüche, **dadurch gekennzeichnet, dass** der Kletterkran am oberen Ende der aktuellen und/oder innerhalb der nächsten 72 Stunden zu erreichenden Turmhöhe angeordnet ist und/oder die Höhe der Position des Kletterkrans am Turm nach oben oder unten verändert wird.

10. Verfahren (1) nach mindestens einem der vorhergehenden Ansprüche, **gekennzeichnet durch**:

- Bereitstellen (1000) eines Turmstumpfes am Turmfuß mit mindestens einem ersten Turmsegment, insbesondere auf einem Turmfundament, und vorzugsweise mit einem zweiten Turmsegment und ggf. einem dritten Turmsegment, wobei vorzugsweise der Turmstumpf mittels eines mobilen Krans, beispielsweise eines Autokrans, errichtet wird,

- Befestigen (1001a) des Kletterkrans an dem Turmstumpf.

11. Verfahren (1) nach mindestens einem der vorhergehenden Ansprüche, **gekennzeichnet durch**:

- Bereitstellen eines Turms,
- Befestigen des Kletterkrans an dem Turm, insbesondere am Turmkopf.

## Claims

1. A method (1) for erecting and/or dismantling a tower, in particular a tower of a wind power installation, the method comprising

- providing (1001) a climbing crane,
- erecting (1006) the tower by hoisting and fastening tower segments and/or dismantling the tower by detaching and lowering tower segments,
- implementing (1002), preferably temporary, securing measures for securing the tower in the state of assembly, in particular in the case of expected wind loads on the tower,
- taking into consideration (1002a) the climbing crane, in particular its weight, in implementing the securing measures,

**characterized by**:

- determining (1003) a current wind velocity and/or a wind velocity to be expected within the next 72 hours,
- determining (1004) a current load and/or a load to be expected within the next 72 hours on the tower with the climbing crane, on the basis of a current tower height and/or a tower height to be reached within the next 72 hours, and of the determined wind velocity.

2. The method (1) as claimed in the preceding claim, **characterized in that** the securing measures comprise one, two or all of the following measures:

- attaching additional weights, in particular at the top of the tower in the state of assembly,
- attaching guys, in particular at the top of the tower in the state of assembly.

3. The method (1) as claimed in at least one of the preceding claims, **characterized in that** the determining of the load comprises:

- determining (1004a) an eigenfrequency of the tower, including the climbing crane, on the basis of a current tower height and/or a tower height to be reached within the next 72 hours, and/or
- determining (1004b) an excitation resulting from a vortex formation of the tower with wind flowing around it, including the climbing crane, on the basis of a current tower height and/or a tower height to be reached within the next 72 hours.

4. The method (1) as claimed in the preceding claim, **characterized in that** the vortex formation is determined as a Kármán vortex street.

5. The method (1) as claimed in at least one of the preceding claims, **characterized by**:

- comparing (1005) the determined load with a maximum load.

6. The method (1) as claimed in the preceding claim, **characterized by**:

- continuing (1006a) the erecting and/or dismantling of the tower if the determined load does not reach or exceed the maximum load.

7. The method (1) as claimed in at least one of the preceding claims 5-6, **characterized by**:

- interrupting (1006b) the erecting and/or dismantling of the tower if the determined load reaches or exceeds the maximum load.

8. The method (1) as claimed in at least one of the preceding claims 5-7, **characterized by**:

- altering (1006c) the planned erecting and/or dismantling of the tower, in particular delaying or accelerating it, in such a way that the determined load, in particular the determined load to be expected within the next 72 hours, does not reach or exceed the maximum load.

9. The method (1) as claimed in at least one of the preceding claims, **characterized in that** the climbing crane is arranged at the upper end of the current tower height and/or the tower height to be reached within the next 72 hours, and/or the height of the position of the climbing crane on the tower is altered upward or downward.

10. The method (1) as claimed in at least one of the preceding claims, **characterized by**:

- providing (1000) a tower stub at the tower base with at least a first tower segment, in particular on a tower foundation, and preferably with a

7

second tower segment and possibly a third tower segment, the tower stub preferably being erected by means of a mobile crane, for example a truck-mounted crane,
- fastening (1001a) the climbing crane to the tower stub.

11. The method (1) as claimed in at least one of the preceding claims,
**characterized by**:

- providing a tower,
- fastening the climbing crane to the tower, in particular to the top of the tower.

**Revendications**

1. Procédé (1) de montage et/ou de démontage d'une tour, en particulier d'une tour d'éolienne, le procédé comprenant

- la mise à disposition (1001) d'une grue d'escalade,
- le montage (1006) de la tour par levage et fixation de segments de tour et/ou le démontage de la tour par desserrage et abaissement de segments de tour,
- la mise en œuvre (1002) de mesures de sécurité, de préférence temporaires, pour sécuriser la tour à l'état monté, en particulier en cas de charges de vent attendues de la tour,
- la prise en compte (1002a) de la grue d'escalade, notamment de son poids, lors de la mise en œuvre des mesures de sécurité,

**caractérisé par** :

- la détermination (1003) d'une vitesse du vent actuelle et/ou attendue dans les 72 prochaines heures,
- la détermination (1004) d'une charge actuelle et/ou attendue dans les 72 prochaines heures sur la tour avec grue d'escalade d'après une hauteur de tour actuelle et/ou à atteindre dans les 72 prochaines heures et de la vitesse du vent déterminée.

2. Procédé (1) selon la revendication précédente, **caractérisé en ce que** les mesures de sécurité comprennent une, deux ou l'ensemble des mesures suivantes :

- la mise en place de poids supplémentaires, en particulier sur l'extrémité supérieure de la tour dans l'état de montage respectif,
- la mise en place de contreventements, en particulier sur l'extrémité supérieure de la tour dans l'état d'installation respectif.

3. Procédé (1) selon au moins l'une quelconque des revendications précédentes, **caractérisé en ce que** la détermination de la charge comprend :

- la détermination (1004a) d'une fréquence propre de la tour incluant la grue d'escalade d'après une hauteur de tour actuelle et/ou à atteindre dans les 72 prochaines heures, et/ou
- la détermination (1004b) d'une excitation résultant d'une formation de tourbillons de la tour entourée par le vent, y compris la grue d'escalade, d'après une hauteur de tour actuelle et/ou à atteindre dans les 72 prochaines heures.

4. Procédé (1) selon la revendication précédente, **caractérisé en ce que** la formation de tourbillons est déterminée comme une allée de tourbillons de Karman.

5. Procédé (1) selon au moins l'une quelconque des revendications précédentes, **caractérisé par** :

- la comparaison (1005) de la charge déterminée à une charge maximale.

6. Procédé (1) selon la revendication précédente, **caractérisé par** :

- la poursuite (1006a) du montage et/ou du démontage de la tour si la charge déterminée n'atteint ou ne dépasse pas la charge maximale.

7. Procédé (1) selon au moins l'une quelconque des revendications précédentes 5 - 6, **caractérisé par** :

- l'interruption (1006b) du montage et/ou du démontage de la tour si la charge déterminée atteint ou dépasse la charge maximale.

8. Procédé (1) selon au moins l'une quelconque des revendications précédentes 5 - 7, **caractérisé par** :

- la modification (1006c) du montage et/ou du démontage prévus de la tour, notamment en décélérant ou en accélérant, de telle manière que la charge déterminée n'atteint pas ou ne dépasse pas la charge maximale, notamment la charge déterminée attendue dans les 72 prochaines heures.

9. Procédé (1) selon au moins l'une quelconque des revendications précédentes, **caractérisé en ce que** la grue d'escalade est disposée sur l'extrémité supérieure de la hauteur de tour actuelle et/ou à atteindre dans les 72 prochaines heures et/ou la hauteur de la position de la grue d'escalade sur la tour est

**EP 4 386 203 B1**

modifiée vers le haut ou vers le bas.

10. Procédé (1) selon au moins l'une quelconque des revendications précédentes, **caractérisé par** :

- la mise à disposition (1000) d'un moignon de tour au pied de la tour avec au moins un premier segment de tour, notamment sur une fondation de tour, et de préférence avec un deuxième segment de tour et éventuellement un troisième segment de tour, dans lequel le moignon de tour est de préférence monté au moyen d'une grue mobile, par exemple une grue automotrice,
- la fixation (1001a) de la grue d'escalade sur le moignon de tour.

11. Procédé (1) selon au moins l'une quelconque des revendications précédentes, **caractérisé par** :

- la mise à disposition d'une tour,
- la fixation de la grue d'escalade sur la tour, en particulier sur le sommet de tour.

Fig. 1

Fig. 2

Fig. 3

**IN DER BESCHREIBUNG AUFGEFÜHRTE DOKUMENTE**

**In der Beschreibung aufgeführte Patentdokumente**

- DE 102011102371 A1
- WO 2018185111 A1
- WO 2017055598 A1
- WO 2017202841 A1